# EUROPÄISCHE PATENTSCHRIFT

(11) **EP 3 515 779 B1**
(45) Veröffentlichungstag und Bekanntmachung des Hinweises auf die Patenterteilung: **10.04.2024**
(21) Anmeldenummer: 17745261.2
(22) Anmeldetag: 20.07.2017
(51) Int. Cl.: B60T 17/22, B60T 13/74, B60T 8/88

(54) **VERFAHREN ZUR ÜBERWACHUNG EINER ELEKTROMAGNETISCH BETÄTIGBAREN BREMSE UND FAHRZEUG MIT ELEKTROMAGNETISCH BETÄTIGBARER BREMSE**
METHOD FOR MONITORING AN ELECTROMAGNETICALLY ACTUATABLE BRAKE, AND VEHICLE WITH ELECTROMAGNETICALLY ACTUATABLE BRAKE
PROCÉDÉ PERMETTANT DE SURVEILLER UN FREIN À ACTIONNEMENT ÉLECTROMAGNÉTIQUE ET VÉHICULE COMPRENANT UN FREIN À ACTIONNEMENT ÉLECTROMAGNÉTIQUE

(30) Priorität: 22.09.2016 DE 102016011427
(43) Veröffentlichungstag der Anmeldung: 31.07.2019
(73) Patentinhaber: SEW-Eurodrive GmbH & Co, 76646 Bruchsal (DE)
(72) Erfinder: IHLE, Maximilian, 77830 Bühlertal (DE); WEIS, Patrick, 75045 Wössingen (DE); BILLET, Christian, 76227 Karlsruhe (DE); MANZ, Friedrich, 76703 Kraichtal-Münzesheim (DE)
(86) Internationale Anmeldenummer: PCT/EP2017/025219
(87) Internationale Veröffentlichungsnummer: WO 2018/054545

(56) Entgegenhaltungen:
- EP-A2- 2 930 504
- DE-A1- 10 149 604
- DE-A1- 19 548 520
- DE-A1-102004 015 447
- DE-B3-102008 029 312
- DE-T5-112012 005 188
- JP-A- H0 842 613
- US-A1- 2003 061 872

## Beschreibung

Die Erfindung betrifft ein Verfahren zur Überwachung einer elektromagnetisch betätigbaren Bremse und Fahrzeug mit elektromagnetisch betätigbarer Bremse.

Es ist allgemein bekannt, dass eine Bremse eine Spule aufweist, durch deren Bestromung ein Magnetfeld erzeugbar ist, welches zur elektromagnetischen Betätigung vorgesehen ist. Mittels Bestromung oder Nicht-Bestromung ist das Lüften oder Einfallen der Bremse bewirkbar.

So ist aus der DE 10 2013 018 272 A1 ein Verfahren zum Überwachen des Zustands einer Bremse eines Mobilteils bekannt.

Aus der DE 10 2012 008 547 B3 ist ein Verfahren zum Überwachen einer Bremse bekannt.

Aus der DE 10 2012 005 862 A1 ist ein Verfahren zur Wirküberwachung von Schienenbremsen bekannt.

Aus der DE 11 2012 005188 T5 ist als nächstliegender Stand der Technik ist eine Diagnosevorrichtung des Bremsenzustands für elektromagnetische Bremse bekannt.

Aus der EP 2 930 504 A2 ist ein Sensorsystem zur Zustandserkennung bekannt.

Aus der DE 195 48 520 A1 ist ein Verfahren zum Ermitteln der Luftspaltdicke einer Kupplung bekannt.

Aus der DE 101 49 604 A1 ist ein Verfahren zur Überwachung des Betriebszustandes einer elektromagnetisch betätigbaren Bremse bekannt.

Aus der DE 10 2004 015447 A1 ist ein Verfahren zum Notbetrieb eines hydraulischen Bremssystems für Kraftfahrzeuge bekannt.

Aus der JP H08 42613 A ist eine Überwachungseinheit für eine Bremse bekannt.

Aus der US 2003/061872 A1 ist ein Verfahren zur Verschleißbestimmung einer Bremse bekannt.

Aus der DE 10 2008 029 312 B3 ist ein Verfahren zur Wirküberwachung einer Schienenbremse bekannt.

Der Erfindung liegt daher die Aufgabe zugrunde, das Betreiben eines Fahrzeugs mit Bremse weiterzubilden, insbesondere zu verbessern.

Erfindungsgemäß wird die Aufgabe bei dem Verfahren nach den in Anspruch 1 und bei dem Fahrzeug nach den in Anspruch 4 angegebenen Merkmalen gelöst.

Wichtige Merkmale der Erfindung bei dem Verfahren zur Überwachung einer elektromagnetisch betätigbaren Bremse, welche eine mit einem linear bewegbar angeordneten Hubmagneten zusammenwirkende bestrombare Spule aufweist, sind, dass der durch die Spule fließende Strom erfasst wird, insbesondere wobei der erfasste Stromwert einer Auswerteeinheit zugeführt wird,
wobei zeitabschnittsweise die an der Spule angelegte Spannung erhöht wird und aus dem dadurch bewirkten Stromverlauf, insbesondere Verlauf des Stromanstiegs, eine auf die Spule bezogene relative Position des Hubmagneten bestimmt wird,
wobei aus der bestimmten Position bestimmt wird, ob die Bremse im eingefallenen Zustand oder im gelüfteten Zustand ist,
wobei der Hubmagnet als Dauermagnet ausgeführt ist oder einen Dauermagneten aufweist.

Von Vorteil ist dabei, dass der Stromverlauf überwacht und/oder ausgewertet wird. Durch die Verwendung des Stromverlaufs wird die Spule der Bremse als Sensor verwendet. Somit wird aus dem Stromverlauf die Position des Hubmagneten bestimmt und somit beispielsweise die Abnutzung des Bremsbelags, eine unzulässig große Abweichung vom vorgesehenen Betriebsverhalten beim Lüften oder Einfallen der Bremse, also Öffnen beziehungsweise Schließen der Bremse.

Erfindungsgemäß wird im eingefallenen Zustand, also bei von Null beginnendem Stromverlauf, aus der bestimmten Position der Verschleißzustand eines Bremsbelags der Bremse bestimmt,
wobei von einem Federelement der Bremse mittels des Hubmagneten ein Bremsbelagträger gegen ein eine Bremsfläche aufweisendes Teil, insbesondere Bremstrommel, zur Erzeugung eines Reibmomentes drückbar ist, insbesondere bei stromloser Spule gedrückt ist. Von Vorteil ist dabei, dass der Verschleißzustand, also der Abnutzungsgrad, des Bremsbelags in einfacher weise bestimmbar ist. Denn bei zunehmendem Verschleiß, also zunehmendem Abnutzungsgrad, wird der Bremsbelag dünnschichtiger und die Position des Hubmagneten beim eingefallenen Zustand verschiebt sich entsprechend.

Erfindungsgemäß wird aus dem beim Lüften der Bremse, also der zum Wechsel des Zustandes der Bremse vom eingefallenen zum gelüfteten Zustand der Bremse, erfasste Stromverlauf die Öffnungskraft der Bremse bestimmt
und auf Überschreiten eines ersten Schwellwertes und/oder Unterschreiten eines zweiten Schwellwertes überwacht, insbesondere zum Anzeigen und/oder Weiterleiten einer Warnung und/oder Fehlermeldung, und/oder Auslösen einer Aktion. Von Vorteil ist dabei, dass eine Zustandsüberwachung und/oder Funktionsüberwachung in einfacher Weise ausführbar ist. Dabei ist durch die Bestimmung der Dauer des Öffnungsvorgangs, also der Zeitabstand zwischen Lösen des Bremsbelags von der Bremsfläche an der Bremstrommel der Bremse und dem Erreichen der von der Spule aus gesehen entferntesten Position des Hubmagneten, eine Überwachung des Wirkungspfades der Bremse ermöglicht. Versagt eines der für diese Wirkung notwendigen Teile der Bremse oder verschleißt eines der Teile derart, dass davon abhängig eine Verschiebung der Positionen und/oder eine Veränderung der Zeitdauer des Öffnungsvorgangs bewirkbar ist, ist durch die entsprechende Bestimmung der Veränderung, wie beispielsweise Abnutzungsgrad eines funktionsnotwendigen Teils, ein Risiko erkennbar und als Warnung oder Fehlermeldung anzeigbar und/oder weitermeldbar.

Erfindungsgemäß werden lokale Extrema des beim Lüften der Bremse erfassten Stromverlaufs bestimmt und aus dem zeitlichen Abstand zweier aufeinander folgender Extrema, insbesondere Extremalbereiche, wird die Dauer des Öffnungsvorgangs, insbesondere Lüftvorgangs, der Bremse bestimmt. Von Vorteil ist dabei, dass die Zeitdauer in einfacher Weise bestimmbar ist.

Erfindungsgemäß wird aus der an der Spule anliegenden Spannung und dem durch die Spule fließenden Strom, insbesondere bei einem Betriebszustand der Bremse mit konstantem Strombetragswert, der Ohm'sche Widerstand der Spule bestimmt und daraus wird die Temperatur der Bremse bestimmt. Von Vorteil ist dabei, dass diese Bestimmungen jeweils in einfacher Weise ausführbar sind, also nur das Bestimmen von Werten elektrisch detektierbarer physikalischer Größen notwendig ist.

Bei einer vorteilhaften Ausgestaltung wird bei einem Betriebszustand der Bremse bei einem im Wesentlichen konstanten Strombetragswert des die Spule durchfließenden Stroms der erfasste Stromwert auf Überschreiten eines ersten Schwellwertes und/oder Unterschreiten eines zweiten Schwellwertes überwacht und davon abhängig eine Warnung angezeigt und/oder über ein Bussystem weitergemeldet. Von Vorteil ist dabei, dass eine einfache Überwachung der Funktion der Bremse ausführbar ist.

Bei einer vorteilhaften Ausgestaltung wird beim dauerhaft gelüfteten Zustand der Strombetragswert des die Spule durchfließenden Stroms erfasst und wird auf unzulässig hohe Abweichungen überwacht und davon abhängig wird eine Warnung angezeigt und/oder über einen Datenbus weitergemeldet. Von Vorteil ist dabei, dass ein plötzliches Versagen in einfacher Weise erkennbar ist.

Wichtige Merkmale bei einem Fahrzeug mit elektromagnetisch betätigbarer Bremse zur Durchführung eines vorgenannten Verfahrens sind, dass am Gestell des Fahrzeugs Radeinheiten jeweils drehbar, insbesondere lenkbar, ausgerichtet sind, insbesondere wobei die zugehörige Drehachse in Normalenrichtung der Verfahrbodenfläche ausgerichtet ist,
wobei eine der Radeinheiten die Bremse aufweist,
wobei ein Mittel zur Erfassung des durch die Spule der Bremse fließenden Stroms vorgesehen ist und das Mittel den erfassten Stromwert an eine Auswerteeinheit des Fahrzeugs weiterleitet.

Von Vorteil ist dabei, dass eine Zustandsüberwachung der Bremse in einfacher Weise ermöglicht ist. Es muss nur der beschriebene Stromwert und gegebenenfalls der Wert der an der Spule anliegenden Spannung bestimmt werden.

Die Erfindung wird nun anhand von Abbildungen näher erläutert:
In der Figur 1 ist eine Radeinheit mit elektromagnetisch betätigbarer Bremse eines erfindungsgemäßen Fahrzeugs.
In der Figur 2 ist ein durch eine zeitlich befristete Spannungserhöhung bewirkter Stromverlauf dargestellt.
In der Figur 3 ist beim Öffnen der Bremse durch plötzliche Induktivitätsänderung bewirkter Stromeinbruch dargestellt.
In der Figur 4 ist ein durch plötzliches Schließen der Bremse bewirkter Stromanstieg dargestellt.

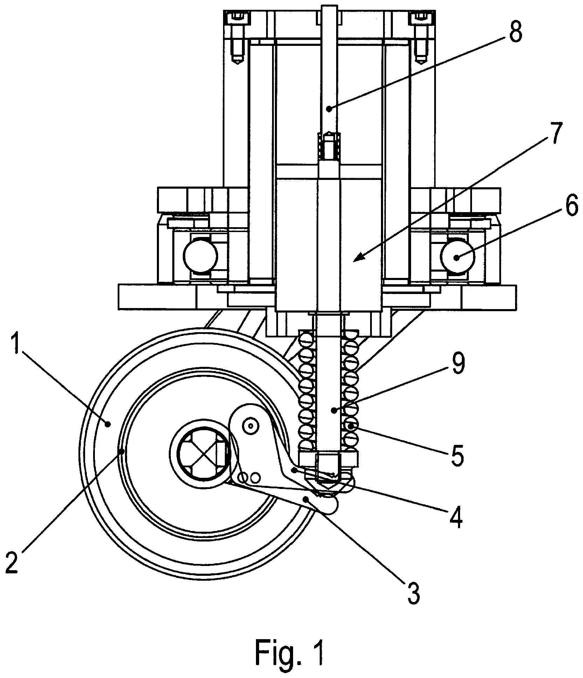

Wie in Figur 1 dargestellt, weist die Radeinheit ein Rad 1 auf, an welchem eine Bremstrommel 2 drehfest verbunden und angeordnet ist. Die Bremstrommel 2 stellt somit eine Bremsfläche dar, gegen die ein Bremsbelag zur Erzeugung eines Reibmoments drückbar ist.
Der Bremsbelag ist auf einem Bremsbelagträger (3, 4) angeordnet, der an einem Tragteil der Radeinheit drehbar gelagert ist
In Figur 1 ist der Bremsbelagträger in eine erste Drehstellung 3 und in zweiter Drehstellung 4 dargestellt. Somit ist der gelüftete und der eingefallene Zustand der Bremse sichtbar dargestellt.

Eine Spule 5 ist an der Radeinheit angeordnet, welche bei Bestromung einen linear bewegbar, insbesondere an der Linearführung 8 geführten, Hubmagneten 7 mit Stößelabschnitt 9 von der Spule herausdrückt infolge durch das Magnetfeld der Spule 5 erzeugter, abstoßender Kraft, welche die Federkraft eines Federelementes überwindet. Somit wird der Stößelabschnitt 9 vom Bremsbelagträger (3, 4) weggedrückt und dadurch die Bremse frei gegeben, also gelüftet.

Die Radeinheit ist über ein Lager 6 drehbar gelagert an einem Gestell eines Fahrzeugs. Das Fahrzeug weist vorzugsweise zwei oder mehr solcher, am Gestell des Fahrzeugs drehbar gelagerten Radeinheiten auf.

Bei unbestromter Spule 5 wird der Hubmagnet 7 von dem Federelement zur Spule 5 hingedrückt, so dass der Stößelabschnitt 9 auf den Bremsbelagträger (3, 4) derart drückt, dass ein Einfallen der Bremse bewirkt wird, also der Bremsbelag des Bremsbelagträgers gegen die Bremstrommel 2 gedrückt wird.

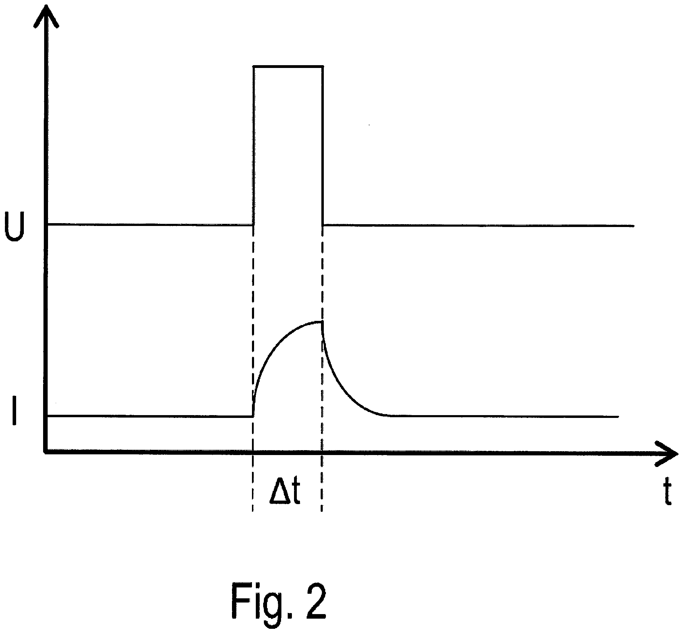

Wie in den Figuren, insbesondere in Figur 2, gezeigt, wird zur Bestimmung der Hubposition die zum dauerhaften Lüften der Bremse wirksame Spannung kurzfristig erhöht. Während dieser Zeit steigt der Strom an. Aus dem zugehörigen Stromverlauf wird die Linearposition des Hubmagneten 7 relativ zur Spule 5 bestimmbar, insbesondere über Bestimmung der differentiellen Induktivität. Denn die Induktivität der Spule 5 nimmt mit zunehmendem Arbeitsluftspalt der Bremse ab.

Die Bestimmung wird in einer Auswerteeinheit ausgeführt, welcher der mittels eines Stromsensors erfasste Stromwerteverlauf des Stromes der Spule 5 zugeführt wird und durch welchen die an der Spule 5 angelegte Spannung steuerbar ist. Somit ist aus der Stromantwort auf den Spannungsüberhöhungspuls mittels Bestimmung der differentiellen Induktivität die Position des Hubmagneten 7 relativ zur Spule 5 bestimmbar. Somit ist aus der anhand der bestimmten Position die Bestimmung des Zustandes der Bremse von der Auswerteeinheit ausführbar. Diese erkennt dann also aus der bestimmten Position, ob die Bremse im gelüfteten oder eingefallenen Zustand ist. Im gelüfteten Zustand wird von der Bremse keine Reibmoment erzeugt, im eingefallenen Zustand wird von der Bremse Reibmoment erzeugt.

Im eingefallenen Zustand der Bremse ist aus der bestimmten Position von der Auswerteeinheit sogar der Grad der Abnutzung des Bremsbelags ermöglicht. Bei Unterschreiten eines Schwellwertes wird dann eine Warnung anzeigbar und/oder weitermeldbar. Der Luftspalt bei eingefallener Bremse steigt mit Abnutzung des Bremsbelags an und entsprechend ist die Position des Hubmagneten 7 verschoben.

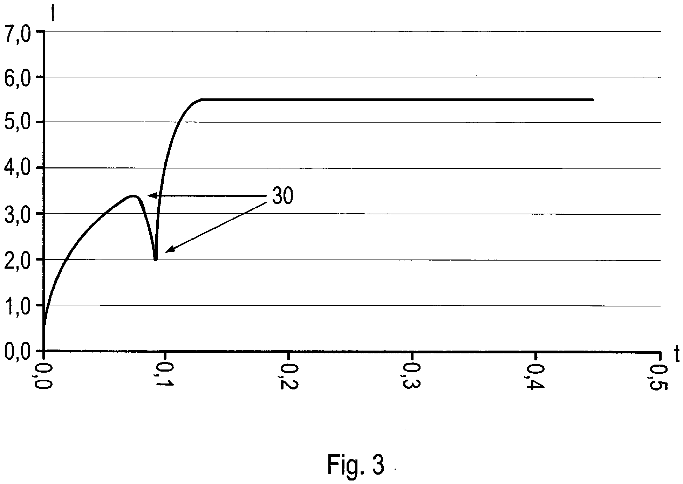

Wie in Figur 3 gezeigt, steigt der Strom durch die Spule 5 beim Öffnen der Bremse an, weil eine entsprechende Spannung an der Spule 5 wirksam ist. Sobald jedoch das von der Spule 5 erzeugte Magnetfeld eine derart große Kraft auf den Hubmagneten 7 ausübt, dass nach Überwinden der Haftreibung sich der Hubmagnet 7 beginnt zu bewegen und somit der Luftspalt sich vergrößert, bricht der Strom infolge der abnehmenden Induktivität ein und steigt nach dem Einbruch mit einer der verringerten Induktivität entsprechenden Steigung an.

Aus den von der Auswerteeinheit durch Stromerfassung und Auswertung des erfassten Stromwerteverlaufs bestimmten Extremalbereiche 30 des Stromverlaufs, also der vor dem Einbrechen höchste Wert und der beim Einbrechen erreichte Minimalwert, ist die für das Lüften der Bremse benötigte Kraft bestimmbar. Außerdem ist die Zeitdauer bis zum Lüften der Bremse von der Auswerteeinheit überwachbar, wobei überwacht wird, ob die Zeitdauer einen Schwellwert überschreitet und/oder einen anderen schwellwert unterschreitet. Auf diese Weise ist die Funktion der Bremse während des Betriebs überwachbar. Somit ist also eine von der gewünschten Funktionsweise abweichende Funktionsweise der Bremse detektierbar und eine entsprechende Warnung anzeigbar oder übermittelbar.

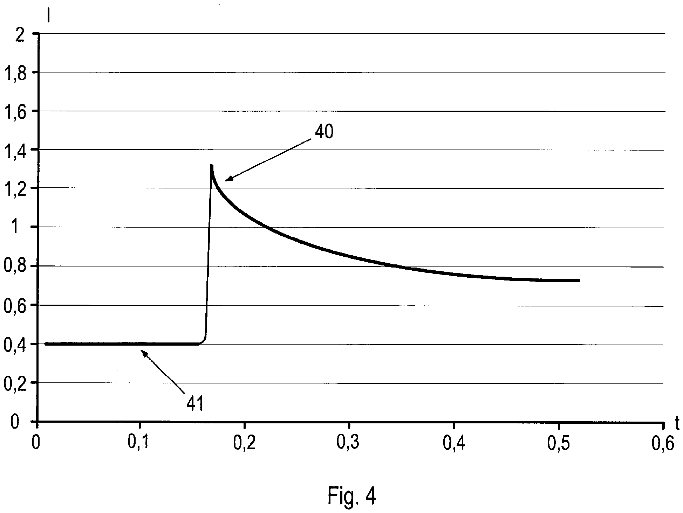

Zur Erreichung des dauerhaft gelüfteten Zustands der Bremse ist ein vorgebbarer Stromwert notwendig. Dieser Haltestrom 41 ist von der Auswerteeinheit überwachbar, so dass ein ungewolltes Wechseln in den eingefallenen Zustand der Bremse detektierbar ist. Denn beim plötzlichen Wechsel in den eingefallenen Zustand der Bremse ist, wie in Figur 4 gezeigt, eine Stromüberhöhung 40 die Folge. Somit ist ein Überschreiten eines Schwellwertes durch den Strom kennzeichnend für ein ungewolltes Einfallen der Bremse.

Wenn also trotz der zur Erzeugung des Haltestroms gesteuerten Spannung eine Überschreitung eines Schwellwertes mittels der Stromerfassung detektiert wird, wird ein Fehler angezeigt und/oder über ein Datenbussystem von der Auswerteeinheit weitergemeldet.

Durch Überwachung eines unterhalb des Wertes für Haltestrom 41 vorgesehenen weiteren Schwellwertes sind weitere Fehlerzustände erkennbar.

Vorzugsweise wird also der erfasste Stromwert auf unzulässige Abweichungen von einem vorgegebenen Wert überwacht und auf diese Weise von der Auswerteeinheit eine Warnung oder ein Fehler angezeigt, insbesondere wie Leitungsbruch, Leitungsschluss, ungewollter Zustandswechsel der Bremse.

Außerdem bestimmt die Auswerteeinheit aus der an die Spule 5 angelegten Spannung und dem erfassten Strom den ohmeschenen Widerstand der Spule. Aus dem so bestimmten Widerstandswert wird dann anhand einer in der Auswerteeinheit hinterlegten Kennlinie beziehungsweise Parametern der Temperaturwert der Spule 5 bestimmt und auf Überschreiten eines Schwellwertes überwacht, so dass auch bei Übertemperatur eine entsprechende Warnung anzeigbar und/oder über den Datenbus an weitere Busteilnehmer weitermeldbar ist.

### Bezugszeichenliste

1 Rad
2 Bremstrommel
3 Bremsbelagträger in erster Drehstellung
4 Bremsbelagträger in zweiter Drehstellung
5 Spule
6 Drehlager für Radeinheit
7 Hubmagnet
8 Führung
9 Stößelabschnitt
30 Extremalbereiche
40 Bereich der Stromüberhöhung
41 Bereich des Haltestroms

## Patentansprüche

1. Verfahren zur Überwachung der Funktion einer elektromagnetisch betätigbaren Bremse während des Betriebs, welche eine mit einem linear bewegbar angeordneten Hubmagneten (7) zusammenwirkende bestrombare Spule (5) aufweist,
wobei der durch die Spule (5) fließende Strom erfasst wird, insbesondere wobei der erfasste Stromwert einer Auswerteeinheit zugeführt wird,
wobei zeitabschnittsweise die an der Spule (5) angelegte Spannung erhöht wird und aus dem dadurch bewirkten Stromverlauf, insbesondere Verlauf des Stromanstiegs, eine auf die Spule (5) bezogene relative Position des Hubmagneten (7) bestimmt wird,
**dadurch gekennzeichnet, dass**
zur Bestimmung der Hubposition die zum dauerhaften Lüften der Bremse wirksame Spannung kurzfristig erhöht wird, wobei aus dem während dieser Zeit ansteigenden zugehörigen Stromverlauf die Linearposition des Hubmagneten (7) relativ zur Spule (5) über Bestimmung der differentiellen Induktivität bestimmt wird,
wobei aus der bestimmten Position bestimmt wird, ob die Bremse im eingefallenen Zustand oder im gelüfteten Zustand ist,
wobei der Hubmagnet (7) als Dauermagnet ausgeführt ist oder einen Dauermagneten aufweist,
- wobei im eingefallenen Zustand, also bei von Null beginnendem Stromverlauf, aus der bestimmten Position der Verschleißzustand eines Bremsbelags der Bremse bestimmt wird,
wobei von einem Federelement der Bremse mittels des Hubmagneten (7) ein Bremsbelagträger (3, 4) gegen ein eine Bremsfläche aufweisendes Teil, insbesondere Bremstrommel (2), zur Erzeugung eines Reibmomentes drückbar ist, insbesondere bei stromloser Spule (5) gedrückt ist,
wobei aus der an der Spule (5) anliegenden Spannung und dem durch die Spule (5) fließenden Strom, insbesondere bei einem Betriebszustand der Bremse mit konstantem Strombetragswert, der Ohm'sche Widerstand der Spule (5) bestimmt wird und daraus die Temperatur der Bremse bestimmt wird,
- wobei lokale Extrema des beim Lüften der Bremse erfassten Stromverlaufs bestimmt werden und aus dem zeitlichen Abstand zweier aufeinander folgender Extrema, insbesondere Extremalbereiche (30), die Zeitdauer des Öffnungsvorgangs, nämlich Lüftvorgangs, der Bremse bestimmt wird,
wobei überwacht wird, ob die Zeitdauer einen Schwellwert überschreitet und/oder einen anderen Schwellwert unterschreitet, so dass die Funktion der Bremse während des Betriebs überwacht wird,
wobei aus dem beim Lüften der Bremse, also der zum Wechsel des Zustandes der Bremse vom eingefallenen zum gelüfteten Zustand der Bremse, erfassten Stromverlauf die Öffnungskraft der Bremse bestimmt wird und auf Überschreiten eines ersten Schwellwertes und/oder Unterschreiten eines zweiten Schwellwertes überwacht wird,
insbesondere zum Anzeigen und/oder Weiterleiten einer Warnung und/oder Fehlermeldung, und/oder Auslösen einer Aktion.

2. Verfahren nach Anspruch 1,
**dadurch gekennzeichnet, dass**
bei einem Betriebszustand der Bremse bei einem konstanten Strombetragswert des die Spule (5) durchfließenden Stroms der erfasste Stromwert auf Überschreiten eines ersten Schwellwertes und/oder Unterschreiten eines zweiten Schwellwertes überwacht wird und davon abhängig eine Warnung angezeigt und/oder über ein Bussystem weitergemeldet wird.

3. Verfahren nach Anspruch 1 oder 2,
**dadurch gekennzeichnet, dass**
beim dauerhaft gelüfteten Zustand der Strombetragswert des die Spule (5) durchfließenden Stroms erfasst wird und auf unzulässig hohe Abweichungen überwacht wird und davon abhängig eine Warnung angezeigt und/oder über einen Datenbus weitergemeldet wird.

4. Fahrzeug mit elektromagnetisch betätigbarer Bremse, wobei
am Gestell des Fahrzeugs Radeinheiten jeweils drehbar, insbesondere lenkbar, ausgerichtet sind, insbesondere wobei die zugehörige Drehachse in Normalenrichtung der Verfahrbodenfläche ausgerichtet ist,
wobei eine der Radeinheiten die Bremse aufweist,
wobei ein Mittel zur Erfassung des durch die Spule (5) der Bremse fließenden Stroms vorgesehen ist und das Mittel den erfassten Stromwert an eine Auswerteeinheit des Fahrzeugs weiterleitet, **dadurch gekennzeichnet dass** die Auswerteeinheit zur Durchführung eines Verfahrens nach mindestens einem der vorangegangenen Ansprüche eingerichtet ist.

## Claims

1. Method for monitoring the functioning of an electromagnetically actuable brake during operation, said brake comprising an energisable coil (5) that interacts with a linear solenoid (7) arranged in a linearly movable manner,
wherein the current flowing through the coil (5) is detected, in particular wherein the detected current value is supplied to an evaluation unit,
wherein the voltage applied to the coil (5) is increased in time intervals, and a relative position of the linear solenoid (7) in relation to the coil (5) is determined from the current curve, in particular the curve of the current increase, induced as a result of said voltage increase,
**characterised in that**
to determine the lifting position, the voltage that acts to keep the brake permanently released is briefly increased, wherein the linear position of the linear solenoid (7) relative to the coil (5) is determined from the associated current curve that rises during said time, by way of determining the differential inductance,
wherein it is determined from the determined position whether the brake is in the applied state or the released state,
wherein the linear solenoid (7) is configured as a permanent magnet or comprises a permanent magnet,
- wherein, in the applied state, i.e. in the case of a current curve starting from zero, the wear state of a brake lining of the brake is determined from the determined position, wherein a brake lining carrier (3, 4) can be pressed against a component that comprises a braking surface, in particular a brake drum (2), by a spring element of the brake, by means of the linear solenoid (7), in order to generate a friction torque, and in particular is pressed when no current is applied to the coil (5), wherein the ohmic resistance of the coil (5) is determined from the voltage applied to the coil (5) and from the current flowing through the coil (5), in particular when the brake is in an operating state having a constant absolute current value, and the temperature of the brake is determined from said ohmic resistance,
- wherein local extremes of the current curve detected when the brake is released are determined, and the length of time of the disengaging operation, namely the releasing operation, of the brake is determined from the time interval between two successive extremes, in particular extremal ranges (30),
wherein it is monitored whether the length of time overshoots a threshold value and/or undershoots another threshold value in such a way that the functioning of the brake is monitored during operation,
wherein the disengagement force of the brake is determined from the current curve that is detected when the brake is released, i.e. when the state of the brake changes from the applied state to the released state of the brake, and is monitored for overshooting a first threshold value and/or undershooting a second threshold value, in particular in order to display and/or relay a warning and/or an error message and/or to trigger an action.

2. Method according to claim 1,
**characterised in that**
when the brake is in an operating state in which the absolute current value of the current flowing through the coil (5) is constant, the detected current value is monitored for overshooting a first threshold value and/or undershooting a second threshold value, and a warning is displayed and/or relayed via a bus system on that basis.

3. Method according to claim 1 or claim 2,
**characterised in that**
in the permanently released state, the absolute current value of the current flowing through the coil (5) is detected and is monitored for impermissibly high deviations, and a warning is displayed and/or relayed via a data bus on that basis.

4. Vehicle comprising an electromagnetically actuable brake, wherein
wheel units are aligned on the chassis of the vehicle in each case in a rotatable, in particular steerable, manner, in particular wherein the associated axis of rotation is oriented in the normal direction of the driving surface,
wherein one of the wheel units comprises the brake,
wherein a means for detecting the current flowing through the coil (5) of the brake is provided, and the means relays the detected current value to an evaluation unit of the vehicle,
**characterised in that**
the evaluation unit is configured for carrying out a method according to at least one of the preceding claims.

## Revendications

1. Procédé de surveillance de la fonction d'un frein à actionnement électromagnétique pendant le fonctionnement, lequel présente une bobine (5) pouvant être alimentée en courant et coopérant avec un aimant de levage (7) disposé de manière à pouvoir se déplacer linéairement,
dans lequel le courant circulant à travers la bobine (5) est détecté, en particulier dans lequel la valeur de courant détectée est amenée à une unité d'évaluation,
dans lequel la tension appliquée à la bobine (5) est élevée par intervalles de temps et une position relative de l'aimant de levage (7) par rapport à la bobine (5) est déterminée à partir de la variation de courant, en particulier de la variation de l'augmentation de courant, provoquée de ce fait,
**caractérisé en ce que**
pour déterminer la position de levage, on élève brièvement la tension efficace pour le desserrage permanent du frein, la position linéaire de l'aimant de levage (7) par rapport à la bobine (5) étant déterminée à partir de la variation de courant correspondante, qui augmente pendant ce temps, par détermination de l'inductance différentielle,
dans lequel on détermine, à partir de la position déterminée, si le frein se trouve à l'état serré ou à l'état desserré,
dans lequel l'aimant de levage (7) est réalisé sous la forme d'un aimant permanent ou présente un aimant permanent,
- dans lequel, à l'état serré, c'est-à-dire avec une variation de courant partant de zéro, l'état d'usure d'une garniture de frein du frein est déterminé à partir de la position déterminée,
dans lequel un support de garniture de frein (3, 4) peut être pressé par un élément à ressort du frein au moyen de l'aimant de levage (7) contre une pièce présentant une surface de freinage, en particulier un tambour de frein (2), pour générer un couple de friction, en particulier lorsque la bobine (5) n'est pas alimentée en courant,
dans lequel la résistance ohmique de la bobine (5) est déterminée à partir de la tension appliquée à la bobine (5) et du courant circulant à travers la bobine (5), en particulier dans un état de fonctionnement du frein avec une valeur de quantité de courant constante, et la température du frein est déterminée à partir de celle-ci,
- dans lequel des extrêmes locaux de la variation de courant détectée lors du desserrage du frein sont déterminés et la durée du processus d'ouverture, c'est-à-dire du processus de desserrage du frein est déterminée à partir de l'écart temporel de deux extrêmes successifs, en particulier de plages extrêmes (30),
dans lequel on surveille si la durée dépasse une valeur seuil et/ou passe en dessous d'une autre valeur seuil, de sorte que la fonction du frein est surveillée pendant le fonctionnement,
dans lequel la force d'ouverture du frein est déterminée à partir de la variation de courant détectée lors du desserrage du frein, c'est-à-dire du passage du frein de l'état serré à l'état desserré du frein, et est surveillée quant au dépassement d'une première valeur seuil et/ou au passage en dessous d'une deuxième valeur seuil,
en particulier pour afficher et/ou transmettre un avertissement et/ou un message d'erreur et/ou déclencher une action.

2. Procédé selon la revendication 1,
**caractérisé en ce que**
dans un état de fonctionnement du frein avec une valeur de quantité de courant constante traversant la bobine (5), la valeur de courant détectée est surveillée quant au dépassement d'une première valeur seuil et/ou au passage en dessous d'une deuxième valeur seuil et, en fonction de cela, un avertissement est affiché et/ou transmis via un système de bus.

3. Procédé selon la revendication 1 ou 2,
**caractérisé en ce que**
à l'état desserré en permanence, la valeur de quantité de courant du courant traversant la bobine (5) est détectée et surveillée pour détecter des écarts élevés inadmissibles et, en fonction de cela, un avertissement est affiché et/ou transmis via un bus de données.

4. Véhicule équipé d'avec frein à actionnement électromagnétique, dans lequel des unités de roue sur le châssis du véhicule sont orientées de manière à pouvoir tourner, en particulier de manière à pouvoir être braquées, l'axe de rotation correspondant étant en particulier orienté dans la direction normale à la surface du sol de déplacement,
dans lequel l'une des unités de roue présente le frein,
dans lequel un moyen de détection du courant circulant à travers la bobine (5) du frein est prévu et le moyen transmet la valeur de courant détectée à une unité d'évaluation du véhicule,
**caractérisé en ce que**
l'unité d'évaluation est conçue pour mettre en oeuvre un procédé selon au moins l'une des revendications précédentes.
